(19) Europäisches Patentamt
European Patent Office
Office européen des brevets

(11) Veröffentlichungsnummer: **0 018 427**
**A1**

(12) # EUROPÄISCHE PATENTANMELDUNG

(21) Anmeldenummer: **79101353.5**

(22) Anmeldetag: **03.05.79**

(51) Int. Cl.$^3$: **G 05 B 19/04**

(43) Veröffentlichungstag der Anmeldung:
**12.11.80 Patentblatt 80/23**

(84) Benannte Vertragsstaaten:
**BE CH DE FR GB IT NL SE**

(71) Anmelder: **MOOG GmbH**
**Hanns-Klemm-Strasse 28**
**D-7030 Böblingen(DE)**

(72) Erfinder: **Handte, Herbert**
**Holzwiesenstrasse 2**
**D-7024 Filderstadt-4(DE)**

(72) Erfinder: **Kollmar, Friedrich**
**Krähenweg 15**
**D-7031 Grafenau - 1(DE)**

(74) Vertreter: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P. Jakob, Dr. rer. nat.**
**G. Bezold Maximilianstrasse 43**
**D-8000 München 22(DE)**

(54) **Elektrische Steuerschaltung.**

(57) Elektrische Steuerschaltung mit einem Signalgeneratorteil (20), der in Abhängigkeit von einem Führungssignal aufeinanderfolgende gleichmäßige Impulse erzeugt. Diese Impulse werden einer aus einzelnen Potentiometern aufgebauten Widerstandsmatrix (21) zugeführt. Die einzelnen Potentiometer werden in einer vorgegebenen.

Reihenfolge mit den Impulsen beschickt und die an den Mittelabgriffen der Potentiometer entstehenden Spannungen werden auf einen Summierverstärker (24) gegeben, an dessen Ausgang das gewünschte Steuersignal in Form eines Polygonzuges entsteht. Zur Vereinfachung des Signalgeneratorteils ist ein für sämtliche Potentiometer (Po 1 - Po 25) gemeinsamer Generalgenerator vorgesehen, der eine kontinuierliche Folge von Ausgangssignalen bildet. Eine Komplementschaltung (23) invertiert die Ausgangssignale des Signalgenerators (20). Jedem Potentiometer (Po1 - Po25) ist ein steuerbarer Schalter (S1 - S25) zugeordnet. Den jeweils aus Potentiometer und Schalter gebildeten Einheiten wird abwechselnd das Ausgangssignal des Signalgenerators (20) und der Komplementschaltung (23) zugeführt. In Abhängigkeit von dem Führungssignal werden nacheinander jeweils zwei Schalter paarweise leitend, so daß stets die Spannungen zweier Potentiometer-Mittelabgriffe an den Summierverstärker (24) gegeben werden.

EP 0 018 427 A1

./...

Fig.1

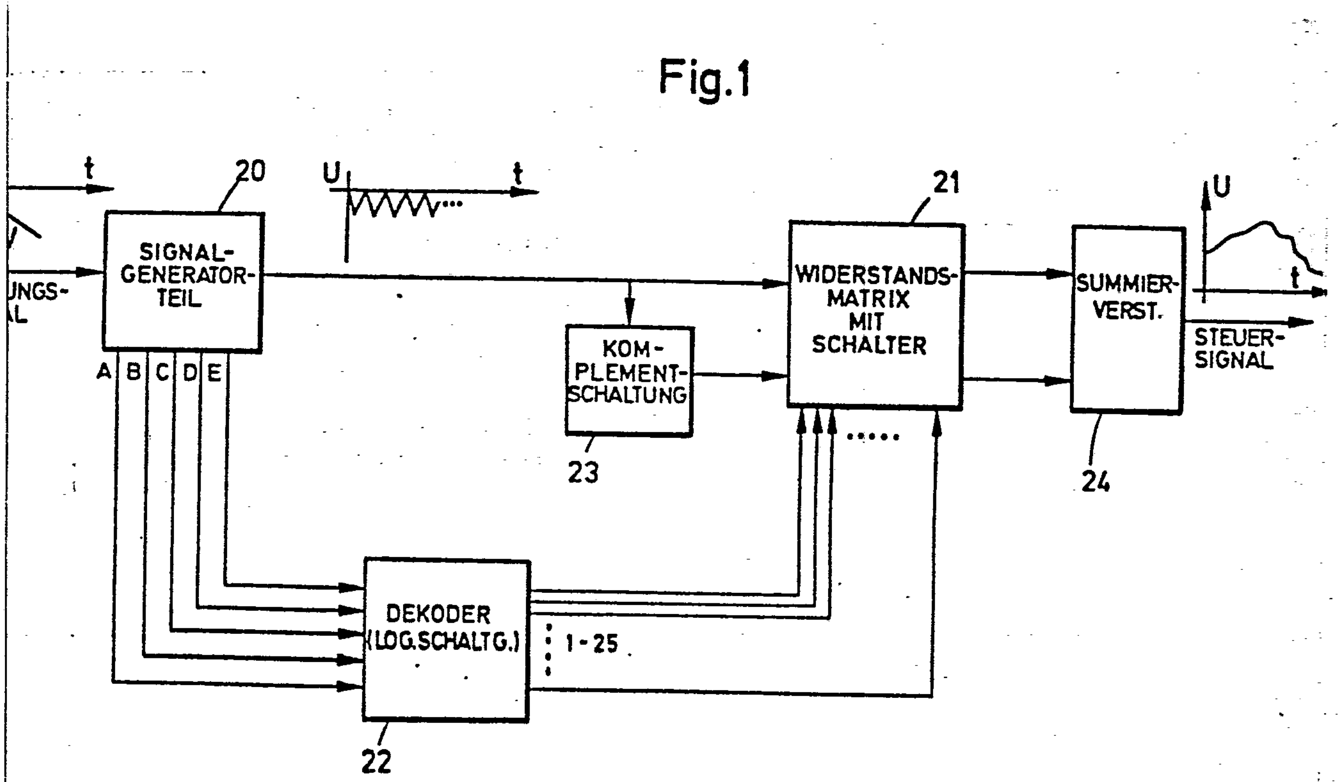

t
20
UNGS-
AL
SIGNAL-
GENERATOR-
TEIL
U
t
21
WIDERSTANDS-
MATRIX
MIT
SCHALTER
SUMMIER-
VERST.
U
t
STEUER-
SIGNAL
A
B
C
D
E
KOM-
PLEMENT-
SCHALTUNG
23
24
DEKODER
(LOG.SCHALTG.)
1-25
22

PATENTANWÄLTE

A. GRÜNECKER
DIPL.-ING.
H. KINKELDEY
DR.-ING.
W. STOCKMAIR
DR.-ING. · AeE (CALTECH)
K. SCHUMANN
DR. RER. NAT. · DIPL.-PHYS.
P. H. JAKOB
DIPL.-ING.
G. BEZOLD
DR. RER. NAT. · DIPL.-CHEM.

8 MÜNCHEN 22
MAXIMILIANSTRASSE 43

MOOG GMBH
Hanns-Klemm-Str. 28
7030 Böblingen

EP 71 - 50/Wr

Elektrische Steuerschaltung

Die Erfindung bezieht sich auf eine elektrische Steuerschaltung nach dem Oberbegriff des Anspruchs 1.

In der europäischen Patentanmeldung 79 10 0026.8 ist bereits eine elektrische Steuerschaltung dieser Art beschrieben, wobei jedoch als Anwendungsgebiet für diese Steuerschaltung explizit lediglich die Steuerung des Dorns eines Extruders angegeben ist. Diese Steuerschaltung ist jedoch nicht nur auf diesem Anwendungsgebiet vorteilhaft einsetzbar, sondern läßt sich überall dort verwenden, wo man ein vorprogrammiertes Ausgangssignal in Abhängigkeit von einem Eingangs- oder Führungssignal benötigt. Bevorzugte weitere Anwendungsgebiete sind:

Steuerung der Bewegung eines Farbspritzroboters in Abhängigkeit von der Zeit oder dem zurückgelegten Weg. Unter einem Farbspritzroboter versteht man Farbspritzgeräte, wie sie beispielsweise in Fertigungsstraßen eingesetzt werden, um die hergestellten Produkte, beispielsweise Automobile, zu spritzen. Diese Farbspritzroboter werden programmiert, um Farbe nur an den gewünschten Stellen und dort mit einer vorgegebenen Dicke aufzubringen.

Verwendung als Funktionsgenerator, um einen Parameter, beispielsweise die Temperatur, in Abhängigkeit von der Zeit zu steuern.

Steuerung eines Radialverstellglieds in einem Extruder, um die Wanddicke eines Vorformlings partiell zu verändern.

Anwendung bei Spritzgießprogrammierern, um den Weg bzw. die Geschwindigkeit der Schnecke sowie den Spritzdruck in Abhängigkeit von der Zeit zu steuern.

Im Gegensatz zu bekannten Steuerschaltungen dieser Art ist bei der angegebenen Steuerschaltung nur ein einziger Signalgenerator vorgesehen, der die Signale für alle Potentiometer der Widerstandsmatrix gemeinsam erzeugt. Da in der Reihenfolge benachbarte Potentiometer mit unterschiedlichen Signalen (abfallende Flanke und aufsteigende Flanke) versorgt werden müssen, ist diesem Signalgenerator eine Komplementschaltung nachgeschaltet, die aus einer absteigenden Flanke eine aufsteigende macht, und umgekehrt. Die steuerbaren Schalter sorgen dafür, daß jeweils nur die ausgewählten zwei benachbarten Potentiometer Signal erhalten. Obwohl in dieser Steuerschaltung eine Komplementschaltung und ein Dekoder zusätzlich benötigt werden, ist die Gesamtschaltung gegenüber der bekannten wesentlich einfacher und arbeitet viel zuverlässiger.

Eine bevorzugte Ausführungsform ergibt sich aus Anspruch 2. Durch die Kettenschaltung der einzelnen Einheiten wird ein sehr einfacher Aufbau erzielt, der auch für höhere Anforderungen an die Genaugikeit der Nachbildung des Steuersignals geeignet ist. Wenn es erforderlich sein sollte, einen Polygonzug mit einer größeren Anzahl von Ecken zu erzeugen, brauchen lediglich weitere gleiche Einheiten hinzugefügt zu werden. Mit dem angegebenen Aufbau des Signalgenerators läßt sich außerdem auf sehr einfache Weise das gewünschte Ausgangssignal unmittelbar aus dem Führungssignal gewinnen.

Sehr einfache Ausführungsformen der Pegelsysmmetrierschaltung und der Vollweggleichrichterschaltung sind in den Ansprüchen 3 und 4 angegeben. Die verwendeten Operationsverstärker sind zu relativ niedrigen Preisen auf dem Markt erhältlich und brauchen nur mit ganz wenigen zusätzlichen Bauelementen versehen zu werden, um die gewünschten Funktionen zu liefern.

Eine vorteilhafte Weiterbildung ist im Anspruch 5 angegeben. Da an den Ausgängen der Einheiten Impulssignale mit jeweils um den Faktor 2 abgestuften Frequenzen entstehen, lassen sich diese sehr einfach dazu verwenden, die den Potentiometern zugeordneten Schalter zu steuern.

Günstige Weiterbildungen ergeben sich weiterhin aus den Ansprüchen 6, 7 und 8. Die obige Steuerschaltung läßt sich sehr einfach mit optischen Anzeigeelementen ergänzen, da als Steuerteil für diese Anzeigeelemente der Steuerteil für die Schalter der Potentiometer mitverwendet werden kann.

Die Ansprüche 9 und 10 bilden die obige Steuerschaltunginsofern weiter, als mit diesen Änderungen statt eines Polygonzuges ein Kurvenzug erreicht wird, der keine ausgeprägten Ecken mehr enthält, die sich unter Umständen nachteilig auswirken können.

Anhand in der Zeichnung dargestellter Ausführungsbeispiele wird die Erfindung im folgenden näher erläutert. Es zeigen:

Fig. 1 ein Blockschaltbild einer ersten Ausführungsform der erfindungsgemäßen Steuerschaltung,

Fig. 2 ein Blockschaltbild einer erweiterten Ausführungsform einer erfindungsgemäßen Steuerschaltung,

Fig. 3 ein Schaltbild des Signalgenerators,

Fig. 4 Spannungs-Zeit-Diagramme der im Signalgenerator auftretenden Signale A', B', C', D' und E',

Fig. 5 Spannungs-Zeit-Diagramme der im Signalgenerator auftretenden Signale A'', B'', C'', D'', E'' und Ei'',

Fig. 6 Spannungs-Zeit-Diagramme der im Signalgenerator auftretenden Signale A, B, C, D und E im Signalgenerator,

Fig. 7 ein Schaltbild des Dekoders,

Fig. 8 Spannungs-Zeit-Diagramme der Ausgangssignale an den Ausgängen P1 - P25 des Dekoders,

Fig. 9 ein Schaltbild der Widerstandsmatrix mit angeschlossenen Schaltern und einem Summierverstärker,

Fig. 10 ein Schaltbild der Leuchtdiodenanzeige,

Fig. 11 ein Schaltbild der Pegelumsetzer I und II nach Fig. 3 mit angeschlossenem Funktionsgenerator, und

Fig. 12 ein Schaltbild des Pegelumsetzers III mit angeschlossener Inverterschaltung.

Aus der DE-OS 2 445 394 ist ein Verfahren bekannt, dieses Steuersignal in Form eines Polygonzuges anzunähern. Dabei wird von der Erkenntnis ausgegangen, daß sich ein Polygonzug durch Addition von sich gegenseitig überlappenden Dreiecken wählbarer Höhe erreichen läßt. In der dort beschriebenen Schaltung bedient man sich einer Widerstandsmatrix, die ein Potentiometer enthält, die in zeitlicher Folge mit Spannungsdreiecken beschickt werden. Jeweils zwei in der vorgegebenen Reihe benachbarte Potentiometer erhalten um eine halbe Dreiecksbreite sich überlappende Dreiecksspannungen gleicher Amplitude. Die für den zu erzeugenden Polygonzug erforderliche Dreieckshöhe wird am Mittelabgriff des Potentiometers abgenommen.

Die Steuerschaltung nach den Fig. 1 - 12 erhält als Eingangssignal ein Führungssignal, das üblicherweise ein zeitlich ansteigendes oder abfallendes Signal, also eine Rampenfunktion ist.

Das in Fig. 1 dargestellte Ausführungsbeispiel der Steuerschaltung enthält einen Signalgeneratorteil 20 dem unmittelbar das Führungssignal zugeführt wird. Ein Ausgang des Signalgeneratorteils 2o ist an einen Schaltungsteil 21 angeschlossen, der eine Widerstandsmatrix und mit der Widerstandsmatrix verbundene Schalter enthält. An weitere fünf Ausgänge A-E des Signalgeneratorteils 20 ist ein Dekoder 22 angeschlossen, dessen Ausgangsleitungen mit dem Schaltungsteil 21 verbunden sind. Eine Komplementschaltung 23 ist zwischen die unmittelbar mit dem Schaltungsteil 21 verbundene Ausgangsleitung des Signalgeneratorteils 20 und einen weiteren Eingang dieses Schaltungsteils 21 geschaltet. An die beiden Ausgangsleitungen des Schaltungsteils 21 ist ein Summierverstärker 24 angeschlossen, der das Ausgangssignal liefert.

Der Signalgeneratorteil 20 ist ausführlicher in Fig. 3 dargestellt. Er besteht aus der Kettenschaltung von fünf identisch aufgebauten Signalumformern 25a-25e. Jeder derartige Signalumformer 25 enthält einen ersten Operationsverstärker 26, dessen nichtinvertie-

render Eingang als Signaleingang dient. An den Ausgang dieses Operationsverstärkers 26 ist ein aus zwei Widerständen R1 und R2 bestehender Spannungsteiler angeschlossen, der mit seinem anderen Anschluß an einer Gleichspannung von -10 V liegt. Der Mittelabgriff dieses Spannungsteilers R1, R2 ist mit dem invertierenden Eingang des Operationsverstärkers 26 verbunden. Der Ausgang dieses Operationsverstärkers 26 ist über einen Widerstand R3 mit dem invertierenden Eingang eines zweiten Operationsverstärkers 27 verbunden. Der nichtinvertierende Eingang dieses Operationsverstärkers 27 liegt an Masse (0 Volt). Der Ausgang dieses Operationsverstärkers 27 ist über eine Diode D1 und einen Widerstand R4 mit dem invertierenden Eingang dieses Operationsverstärkers 27 verbunden. Die Kathode der Diode D1 liegt dabei am Ausgang des Operationsverstärkers 27. Die einzelnen Signalumformer 25 sind jeweils mit dem nichtinvertierenden Eingang des Operationsverstärkers 26 an den gemeinsamen Verbindungspunkt zwischen der Diode D1 und den Widerstand R4 des vorhergehenden Signalumformers 25 angeschlossen. Das Ausgangssignal des in der Kette letzten Signalumformers 25 wird über einen, einen Operationsverstärker enthaltenden Impedanzwandler 28 geführt, dessen Ausgangsanschluß der eigentliche Signalausgangsanschluß des Signalgeneratorteils 20 ist. Der Signalgeneratorteil 20 weist weitere fünf Ausgänge auf, die von den Ausgängen der Operationsverstärker 27 aus den einzelnen Signalumformerstufen 25 über jeweils eine Diode D2 nach außen geführt sind. Die auf diesen Ausgängen erscheinenden Signale sind mit den Buchstaben A, B, C, D und E bezeichnet. Diese Signale werden dem Dekoder 22 zugeführt.

Um das Verständnis des Signalgeneratorteils 20 zu erleichtern, sind in den Figuren 4 bis 6 Signalverläufe A-E, A'-E' und A''-E'' dargestellt. Die Signale A-E treten an den Kathoden der Dioden D2 auf. Die Signale A'-E' treten an den Ausgängen der Operationsverstärker 26 der einzelnen Signalumformer 25 auf, während die Signale A''-E'' an den Anoden der einzelnen Dioden D1 entstehen.

Der den Operationsverstärker 26 bildende Schaltungsteil dient im wesentlichen zur Pegelverschiebung und Pegelsymmetrierung des Eingangssignals. Um in der gesamten Kette Signale mit möglichst gleicher Amplitude zu erzielen, ist es vorteilhaft, den Verstärkungsfaktor dieses Schaltungsteils mit V = 2 zu wählen. Der den Operationsverstärker 27 enthaltende Schaltungsteil wirkt als Vollweggleichrichter. Die Funktion dieser beiden Schaltungsteile wird im folgenden anhand des in der Kette ersten Signalumformers 25a näher erläutert.

Der Operationsverstärker 26 bildet aufgrund seiner Beschaltung aus dem von 0 bis -10 V gehenden Führungssignal an seinem Ausgang A' ein von +10 V - -10 V gehendes Signal. Dieses Signal wird dem Operationsverstärker 27 zugeführt, der an der Anode der Diode 31 das gleichgerichtete Signal von A' bildet, das mit A'' bezeichnet ist. An der Kathode der Diode D2 wird eine positive Spannung A erzeugt, wenn das Signal A' negativ ist. Solange A' positiv ist, ist die Diode D1 leitend und der Verstärker invertiert das Signal A'. Die Durchlaßspannung der Diode D1 hat keinen Einfluß auf die Invertierung, da der Verstärker mit dem Signal A'' gegengekoppelt wird. Da die Ausgangsspannung des Operationsverstärkers 27 negativ ist, sperrt die Diode D2 und die Spannung A wird über den an der Kathode der Diode D2 liegenden Widerstand Null. Wird die Spannung A' negativ, dann sperrt die Diode D1 und die Signale A', A'' sind identisch. Da der Ausgang des Operationsverstärkers 27 jetzt positiv ist, ist die Diode D2 leitend und die Spannung A ist ebenfalls positiv.

Mit der beschriebenen Schaltung kann aus einer Rampenspannung eine Dreiecksspannung erzeugt werden. Werden nun mehrere solche Signalumformer 25 hintereinander geschaltet, so verdoppelt sich die Anzahl der Dreiecke mit jeder zusätzlichen Schaltung. Bei einer Hintereinanderschaltung von n Schaltungen lassen sich aus einer Rampenspannung $2^{n-1}$ Dreiecke erzeugen. Ebenso nimmt die Zahl der Spannungssprünge der Digitalsignale A-E zu. Die in den Figuren 4 - 6 dargestellten Diagramme geben jeweils einen ganzen Arbeitszyklus wieder.

Am Ausgang des Signalgeneratorteils 20 erscheint das Signal E''. Dieses Signal E'' wird im Ausführungsbeispiel nach Fig. 2 dem Schaltungsteil 21 und der Komplementschaltung 23 zugeführt. Das mit der Komplementschaltung 23 erhaltene Signal Ei'' ist in Fig. 5 ganz unten gezeigt. Das Signal Ei'' ist gegenüber dem Signal E'' um eine halbe Dreiecksbreite phasenverschoben.

Der Dekoder 22 ist im einzelnen in Fig. 7 dargestellt. Er besteht aus einer logischen Schaltung, der eingangsseitig die Signale A - E zugeführt werden und die ausgangsseitig an den Ausgängen P1 - P 25 entsprechend dekodierte Signale liefert. Der Zusammenhang zwischen den Eingangssignalen A - E und den Ausgangssignalen P1 -P25 wird anhand der der Beschreibung folgenden Tabellen I und II erläutert. Fig. 8 zeigt das zugehörige Spannungs-Zeitdiagramm bzw. Spannungs-Wegdiagramm bei Maschinen mit Positionsmeßumformer dieser Ausgangssignale P1 - P25 über einen Zyklus. Wie aus den beiden Tabellen und Fig. 8 ersichtlich ist, wird eine Zykluszeit unterteilt in 25 gleich große Zeitabschnitte. An den Ausgängen P1 - P25 des Dekoders 22 erscheinen nacheinander Impulse, die sich mit Ausnahme des ersten Signals P1 und des letzten Signals P25 über jeweils zwei Zeitabschnitte erstrecken. An benachbarten Ausgängen überlappen sich die Impulse jeweils über einen Zeitabschnitt. Beispielsweise gibt der Ausgang P5 in den Zeitabschnitten 4 und 5 einen Impuls ab. Der benachbarte Ausgang P4 gibt außer im Zeitabschnitt 3 auch im Zeitabschnitt 4 einen Impuls ab und der Ausgang P6 gibt außer im Zeitabschnitt 6 auch im Zeitabschnitt 5 einen Impuls ab.

Um den oben angesprochenen Polygonzug zu erhalten, müssen die einzelnen Potentiometer der Widerstandsmatrix in den einzelnen Zeitabschnitten mit den Dreieckspannungen versorgt werden. Dabei darf nur jeweils eine absteigende Flanke mit einer aufsteigenden Flanke des nächstfolgenden Dreiecks addiert werden. In der oben angesprochenen deutschen Offenlegungsschrift 24 45 394 wird dies dadurch erreicht, daß die jedem Potentiometer zugeordneten Dreiecksgeneratoren nacheinander gesteuert werden, so daß nur jeweils benachbarte Potentiometer Signal erhalten. Bei der vorliegenden Schaltung erhalten jedoch alle Potentiometer ständig Eingangssignale zugeführt. Wie Fig. 8 zeigt, werden die Potentiometer Po1, Po3 - Po25 (alle ungeradzahligen) unmittelbar mit dem Ausgangssignal des Signalgenerators 20 gespeist, während die Potentiometer Po2, Po4 - Po 24 (alle geradzahligen) an den Ausgang der Komplementschaltung 23 angeschlossen sind. Die ungeradzahligen Potentiometer erhalten also das in Fig. 5 gezeigte Signal E'', während den geradzahligen Potentiometern das Signal Ei'' zugeführt wird. An die Mittelabgriffe der Potentiometer ist jeweils ein steuerbarer Schalter S1-S25 angeschlossen. Diese Schalter S1-S25 werden gesteuert durch die Signale P1-P25 vom Dekoder 22. Diese Schalter sind in den Zeiten, in denen die Signale P1-P25 Null sind, geöffnet und in den Impulszeiten geschlossen. Alle Schalter S1-S25 sind mit den Eingängen eines Summierverstärkers 30 verbunden. Die angegebene Steuerung dieser Schalter bewirkt, daß nur jeweils ein geradzahliges Potentiometer und das ihm unmittelbar benachbarte ungeradzahlige Potentiometer an den Summierverstärker 30 angeschlossen ist. Es ist nicht zwingend erforderlich, die Schalter S1 - S25 zwischen dem Summierverstärker 30 und den Mittelabgriffen der Potentiometer anzuordnen. Mann erhält das gleiche Ergebnis, wenn alle Mittelabgriffe an den Summierverstärker 30 angeschlossen sind und die Schalter sich in den Zuführleitungen der einzelnen Potentiometer befinden.

Das Ausführungsbeispiel nach Fig. 2 unterscheidet sich von dem Ausführungsbeispiel nach Fig. 1 in zwei Punkten. Der Signalgenerator 20 dieses Ausführungsbeispiels nach Fig. 2 enthält zusätzlich einen Funktionsgenerator 20a, der zur Abrundung der Spannungsdreiecke dient. Es kann beispielsweise hierzu der integrierte Schaltkreis ICL 8038 Verwendung finden. Dieser enthält u.a. einen statischen Sinuswandler, der eine Dreieckspannung in eine sinusförmige Spannung umwandelt. Die Verwendung eines solchen Funktionsgenerators 20a bewirkt, daß zwei aufeinanderfolgende Punkte nicht durch eine gerade Linie (Linearinterpolation) miteinander verbunden werden, sondern durch einen gerundeten Kurvenzug. Beim Blasformen beispielsweise, können sich u. U. die Ecken des Steuersignals nachteilig auf die Artikelqualität auswirken. Die sinusförmige Ausgangsspannung des Funktionsgenerators wird mit dem Pegel- umsetzer III so verschoben, daß ihre Amplitude von Null nach +1 geht, so daß im Prinzip eine sinusquadratförmige Spannung entsteht.

Im Beispiel gemäß Fig. 2 entsteht am Ausgang des Pegelumsetzers III eine Cosinusquadrat-Spannung. Am Ausgang der Komplementschaltung entsteht durch Komplementbildung eine Sinusquadratspannung ($1-\cos^2 x = \sin^2 x$). Stehen also die Mittelabgriffe benachbarter Potentiometer auf gleichem Niveau, ergibt die Addition der einzelnen Funktionsabschnitte eine Konstante, da die Addition aus Cosinusquadrat x und Sinusquadrat x stets 1 ergibt. Um von Dreiecksbetrieb auf den Betrieb mit Funktionsgenerator umschalten zu können, ist im Ausführungsbeispiel nach Fig. 2 ein Umschalter U1 vorgesehen. Die Pegelumsetzer I, II und III dienen lediglich zur Spannungsanpassung. Sie sind im Detail in den Fig. 11 und 12 dargestellt.

Ein weiterer Unterschied des Ausführungsbeispiels nach Fig. 2 zum Ausführungsbeispiel nach Fig. 1 besteht darin, daß eine Leuchtdiodenanzeigeschaltung 35 vorgesehen ist. Diese Leuchtdiodenanzeigeschaltung 35 erhält prinzipiell dieselben Eingangssignale wie der Schaltungsteil 21 (Widerstandsmatrix mit Schalter). Wegen des größeren Strombedarfs, weil die Lichtstärke der Leuchtdioden etwa proportional zum Durchlaßstrom ist, weil der Widerstand der Leuchtdioden nicht konstant ist, und damit sich der unterschiedliche Durchlaßwiderstand der Schalter SL1 - 25 nicht auf den Strom durch die Leuchtdioden und somit auf die Lichtstärke auswirkt, werden jedoch die Leuchtdioden durch einen eingeprägten Strom (z. B. Sinus oder Dreieck) angesteuert. Die Pegelumsetzer 36 und 37, die im Detail aus Fig. 10 ersichtlich sind, wandeln die Dreieck- bzw. Sinuseingangsspannungen der Widerstandsmatrix 21 in proportionale Ströme für die Leuchtdioden um. Die Leuchtdioden L1 - L25 werden über Schalter SL1 - 25, die an die Ausgänge P1 - P25 des Dekoders 22 angeschlossen sind, angesteuert. Die Leuchtdioden L1-L25 erhalten also immer dann einen Strom, wenn der Mittelabgriff des zugehörigen Potentiometers P01-P025 an den Summierverstärker 24 angeschaltet ist. Damit entsteht eine optische Darstellung des Programmablaufes, wenn man die Leuchtdioden in ihrer Reihenfolge nebeneinander anordnet. Vorteilhafterweise wird man auf einer Konsole oder dergl. die Einstellorgane der Potentiometer den Leuchtdioden örtlich zuordnen. Ein weiterer Vorteil der Lumineszenzdiodenansteuerung besteht darin, daß ein schleichender Übergang der Anzeige entsteht. Während eine Lumineszenzdiode langsam dunkler wird, wird die benachbarte langsam heller. Der Gesamtstrom durch beide Leuchtdioden ist konstant.

<u>Anlage</u>
Tabellen I und II

Tabelle I

| | A | B | C | D | E | P1 | 2 | 3 | 4 | 5 | 6 | 7 | 8 | 9 | 10 | 11 | 12 | 13 | 14 | 15 | P 16 |
|---|---|---|---|---|---|---|---|---|---|---|---|---|---|---|---|---|---|---|---|---|---|
| 1 | 0 | 1 | 1 | 1 | 1 | 1 | 1 | 0 | 0 | 0 | 0 | 0 | 0 | 0 | 0 | 0 | 0 | 0 | 0 | 0 | 0 |
| 2 | 0 | 1 | 1 | 1 | 0 | 0 | 1 | 1 | 0 | 0 | 0 | 0 | 0 | 0 | 0 | 0 | 0 | 0 | 0 | 0 | 0 |
| 3 | 0 | 1 | 1 | 0 | 0 | 0 | 0 | 1 | 1 | 0 | 0 | 0 | 0 | 0 | 0 | 0 | 0 | 0 | 0 | 0 | 0 |
| 4 | 0 | 1 | 1 | 0 | 1 | 0 | 0 | 0 | 1 | 1 | 0 | 0 | 0 | 0 | 0 | 0 | 0 | 0 | 0 | 0 | 0 |
| 5 | 0 | 1 | 0 | 0 | 1 | 0 | 0 | 0 | 0 | 1 | 1 | 0 | 0 | 0 | 0 | 0 | 0 | 0 | 0 | 0 | 0 |
| 6 | 0 | 1 | 0 | 0 | 0 | 0 | 0 | 0 | 0 | 0 | 1 | 1 | 0 | 0 | 0 | 0 | 0 | 0 | 0 | 0 | 0 |
| 7 | 0 | 1 | 0 | 1 | 0 | 0 | 0 | 0 | 0 | 0 | 0 | 1 | 1 | 0 | 0 | 0 | 0 | 0 | 0 | 0 | 0 |
| 8 | 0 | 1 | 0 | 1 | 1 | 0 | 0 | 0 | 0 | 0 | 0 | 0 | 1 | 1 | 0 | 0 | 0 | 0 | 0 | 0 | 0 |
| 9 | 0 | 0 | 0 | 1 | 1 | 0 | 0 | 0 | 0 | 0 | 0 | 0 | 0 | 1 | 1 | 0 | 0 | 0 | 0 | 0 | 0 |
| 10 | 0 | 0 | 0 | 1 | 0 | 0 | 0 | 0 | 0 | 0 | 0 | 0 | 0 | 0 | 1 | 1 | 0 | 0 | 0 | 0 | 0 |
| 11 | 0 | 0 | 0 | 0 | 0 | 0 | 0 | 0 | 0 | 0 | 0 | 0 | 0 | 0 | 0 | 1 | 1 | 0 | 0 | 0 | 0 |
| 12 | 0 | 0 | 0 | 0 | 1 | 0 | 0 | 0 | 0 | 0 | 0 | 0 | 0 | 0 | 0 | 0 | 1 | 1 | 0 | 0 | 0 |
| 13 | 0 | 0 | 1 | 0 | 1 | 0 | 0 | 0 | 0 | 0 | 0 | 0 | 0 | 0 | 0 | 0 | 0 | 1 | 1 | 0 | 0 |
| 14 | 0 | 0 | 1 | 0 | 0 | 0 | 0 | 0 | 0 | 0 | 0 | 0 | 0 | 0 | 0 | 0 | 0 | 0 | 1 | 1 | 0 |
| 15 | 0 | 0 | 1 | 1 | 0 | 0 | 0 | 0 | 0 | 0 | 0 | 0 | 0 | 0 | 0 | 0 | 0 | 0 | 0 | 1 | 1 |
| 16 | 0 | 0 | 1 | 1 | 1 | 0 | 0 | 0 | 0 | 0 | 0 | 0 | 0 | 0 | 0 | 0 | 0 | 0 | 0 | 0 | 1 |

zeitlich nacheinander mit den Spannungsverläufen beschickt werden und einem mit den Mittelabgriffen der Potentiometer in Verbindung stehenden Summierverstärker, dadurch gekennzeichnet, daß der Signalgeneratorteil einen für alle Potentiometer (Po 1 - Po 25) gemeinsamen Signalgenerator (20) aufweist, der aus dem Führungssignal eine kontinuierliche Folge von Spannungsverläufen an seinem Ausgang bildet, daß an den Ausgang des Signalgenerators (20) eine Komplementschaltung (23) angeschlossen ist, daß jedem Potentiometer der Widerstandsmatrix (21) ein steuerbarer Schalter (S1 - S25) zugeordnet ist, daß in der vorgegebenen Reihenfolge aufeinanderfolgenden Einheiten, bestehend aus Potentiometer (Po) und Schalter (S1 - S25), jeweils abwechselnd das Ausgangssignal des Signalgenerators (20) und der Komplementschaltung (23) zugeführt ist, und daß die Schalter (S1 - S25) in Abhängigkeit vom Führungssignal derart gesteuert sind, daß die Schalter (S1 - S25) in der vorgegebenen Reihenfolge nacheinander jeweils paarweise leitend sind, um das Ausgangssignal von jeweils nur zwei in der Reihenfolge benachbarten Potentiometern (Po1 - Po25) an den Summierverstärker (24) zu liefern.

2. Steuerschaltung nach Anspruch 1, dadurch gekennzeichnet, daß der Signalgenerator (20) aus der Kettenschaltung von mehreren Einheiten (25a-25e) aufgebaut ist, die eine Pegelsymmetrierschaltung (26) und eine daran angeschlossene Vollweggleichrichterschaltung (27) umfassen.

3. Steuerschaltung nach Anspruch 2, dadurch gekennzeichnet, daß die Pegelsymmetrierschaltung einen Operationsverstärker (26) aufweist, dessen Ausgang über einen Spannungsteiler (R1, R2) an Gleichspannung liegt und dessen invertierender Eingang mit dem Mittelabgriff des Spannungsteilers verbunden ist.

4. Steuerschaltung nach Anspruch 2 oder 3, dadurch gekennzeichnet, daß die Vollweggleichrichterschaltung einen Operationsverstärker (27) aufweist, dessen Ausgang über eine Diode (D1) und einen Widerstand (R4) auf den Steuereingang rückgekoppelt ist, und daß das Ausgangssignal für die nächste Einheit von dem gemeinsamen Anschlußpunkt zwischen Diode und Widerstand abgegriffen wird.

5. Steuerschaltung wenigstens nach Anspruch 2, dadurch gekennzeichnet, daß an die Ausgänge der Einheiten (25a-25e) ein Dekoder (22) angeschlossen ist, der die Steuersignale für die den Potentiometern (Po 1 - Po 25) zugeordneten Schalter (S1 - S25) liefert.

6. Steuerschaltung nach einem der Ansprüche 1 - 5, gekennzeichnet durch optische Anzeigeelemente (L1 - L25), mit denen die jeweils angesteuerten Schalter (S1-S25) und die jeweils eingeschalteten Potentiometer (Po1 - Po25) entsprechend ihrer jeweiligen Wertigkeit am Steuersignal anzeigbar sind.

7. Steuerschaltung nach Anspruch 5 und 6, dadurch gekennzeichnet, daß die Anzeigeelemente (L1-L25) von dem Dekoder (22) und von denen sich kontinuierlich ändernden Signalverläufen des Signalgeneratorteils (20) und der Komplementschaltung (23) angesteuert sind.

8. Steuerschaltung nach Anspruch 6 oder 7, dadurch g e k e n n z e i c h n e t , daß die Anzeigeelemente als Lumineszenzdioden (L1-L25) ausgebildet sind.

9. Steuerschaltung nach einem der Ansprüche 1 - 8, dadurch g e k e n n z e i c h n e t , daß der Signalgenerator (20) Signalverläufe in Form von Sinuswellen oder Sinusquadrat-Wellen erzeugt.

10. Steuerschaltung nach Anspruch 9, dadurch g e k e n n z e i c h n e t , daß der Signalgenerator (20) einen Funktionsgenerator (20a) enthält, der die Wellen aus Dreieckspannungen erzeugt.

11. Steuerschaltung nach einem der Ansprüche 1 - 10, dadurch g e k e n n z e i c h n e t , daß die Widerstandsmatrix (21) mit einstellbaren Spannungsteilern aufgebaut ist.

12. Steuerschaltung nach einem der Ansprüche 1 - 11, dadurch g e k e n n z e i c h n e t , daß der Signalgenerator (20) als statischer Analog-Digital-Wandler verwendet wird.

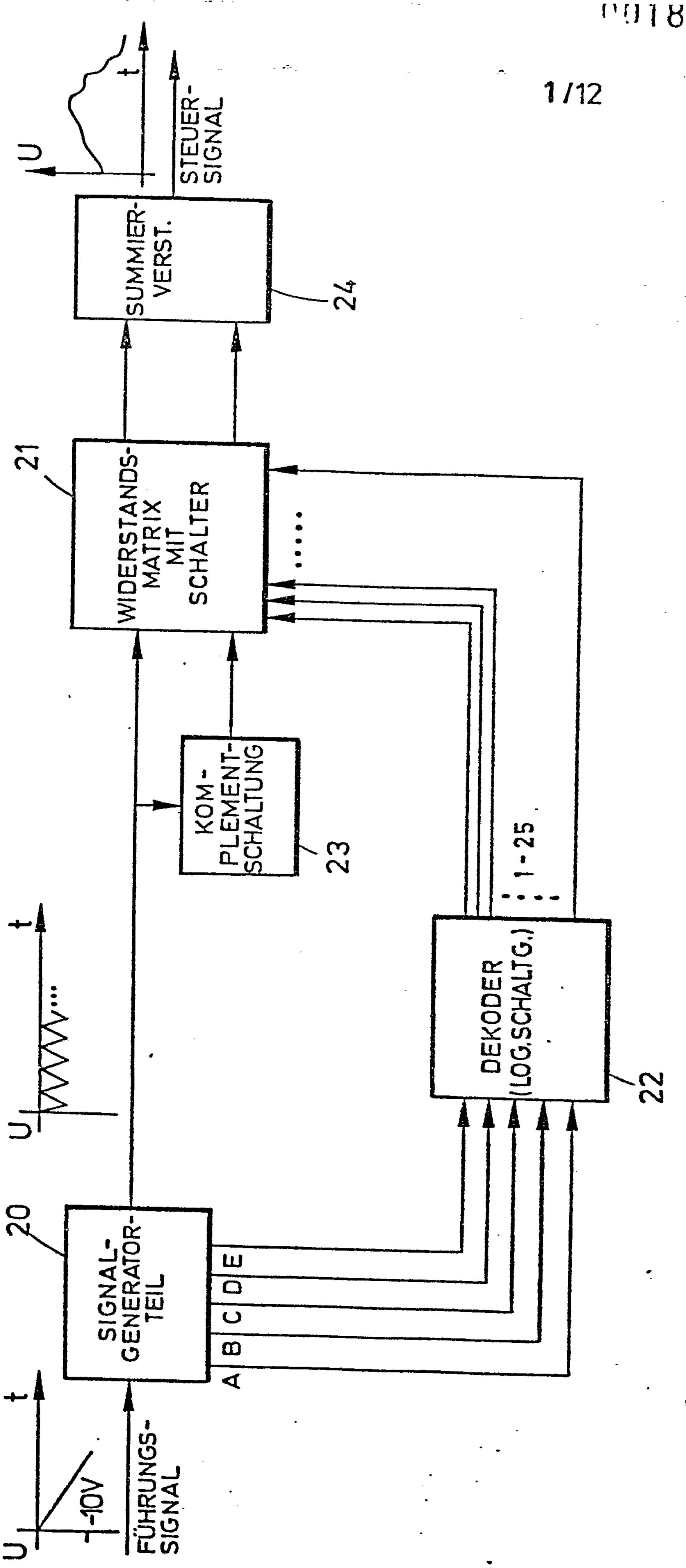
U
t
-10V
FÜHRUNGS-
SIGNAL
SIGNAL-
GENERATOR-
TEIL
20
A B C D E
U
t
DEKODER
(LOG.SCHALTG.)
22
1 - 25
KOM-
PLEMENT-
SCHALTUNG
23
WIDERSTANDS-
MATRIX
MIT
SCHALTER
21
SUMMIER-
VERST.
24
U
t
STEUER-
SIGNAL

Fig.1

Fig.2

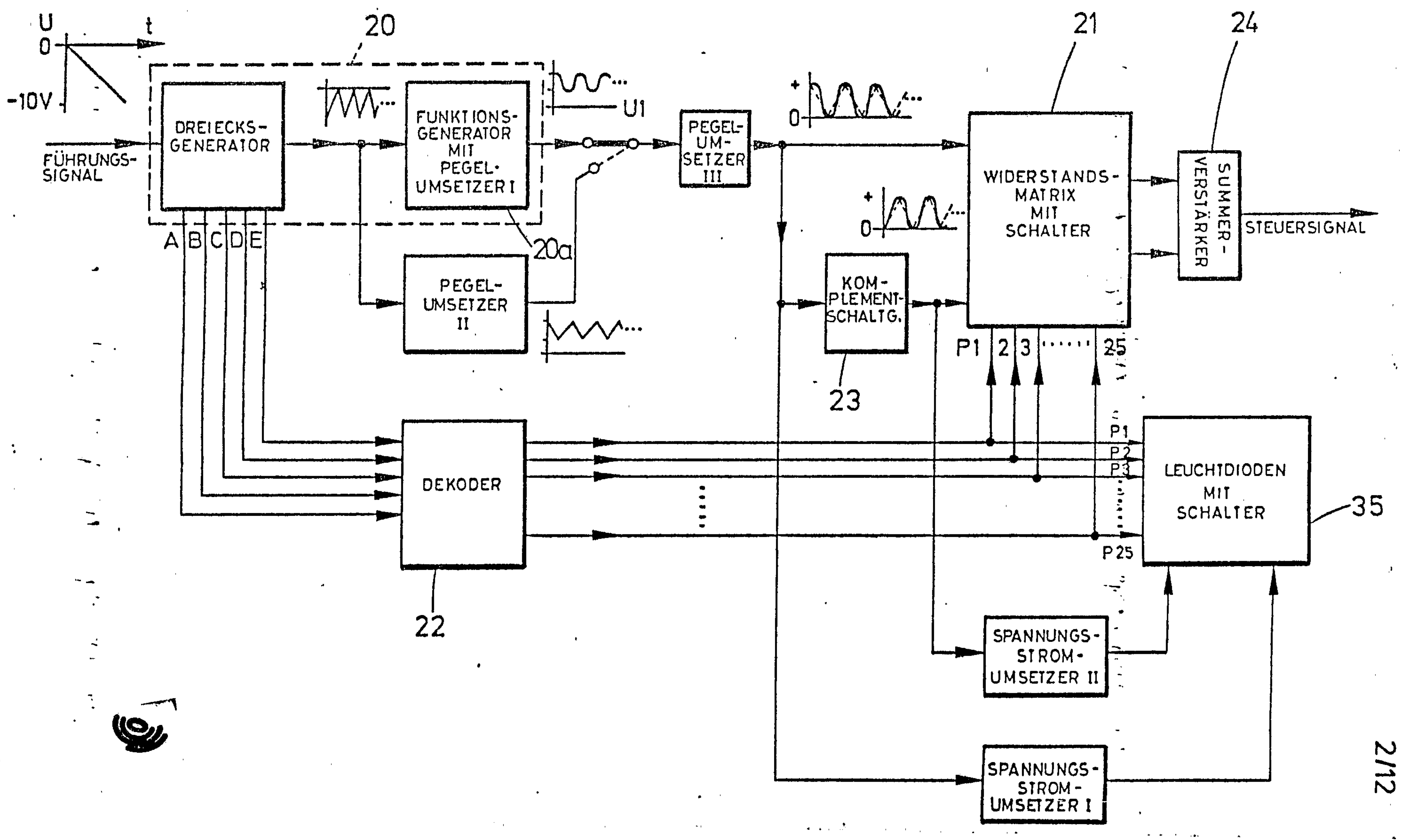

U
t
0
-10V
FÜHRUNGS-SIGNAL
20
DREIECKS-GENERATOR
A B C D E
FUNKTIONS-GENERATOR MIT PEGEL-UMSETZER I
20a
U1
PEGEL-UMSETZER II
PEGEL-UM-SETZER III
KOM-PLEMENT-SCHALTG.
23
21
WIDERSTANDS-MATRIX MIT SCHALTER
P1 2 3 25
24
SUMMER-VERSTÄRKER
STEUERSIGNAL
DEKODER
22
P1
P2
P3
P25
LEUCHTDIODEN MIT SCHALTER
35
SPANNUNGS-STROM-UMSETZER II
SPANNUNGS-STROM-UMSETZER I

Fig.3

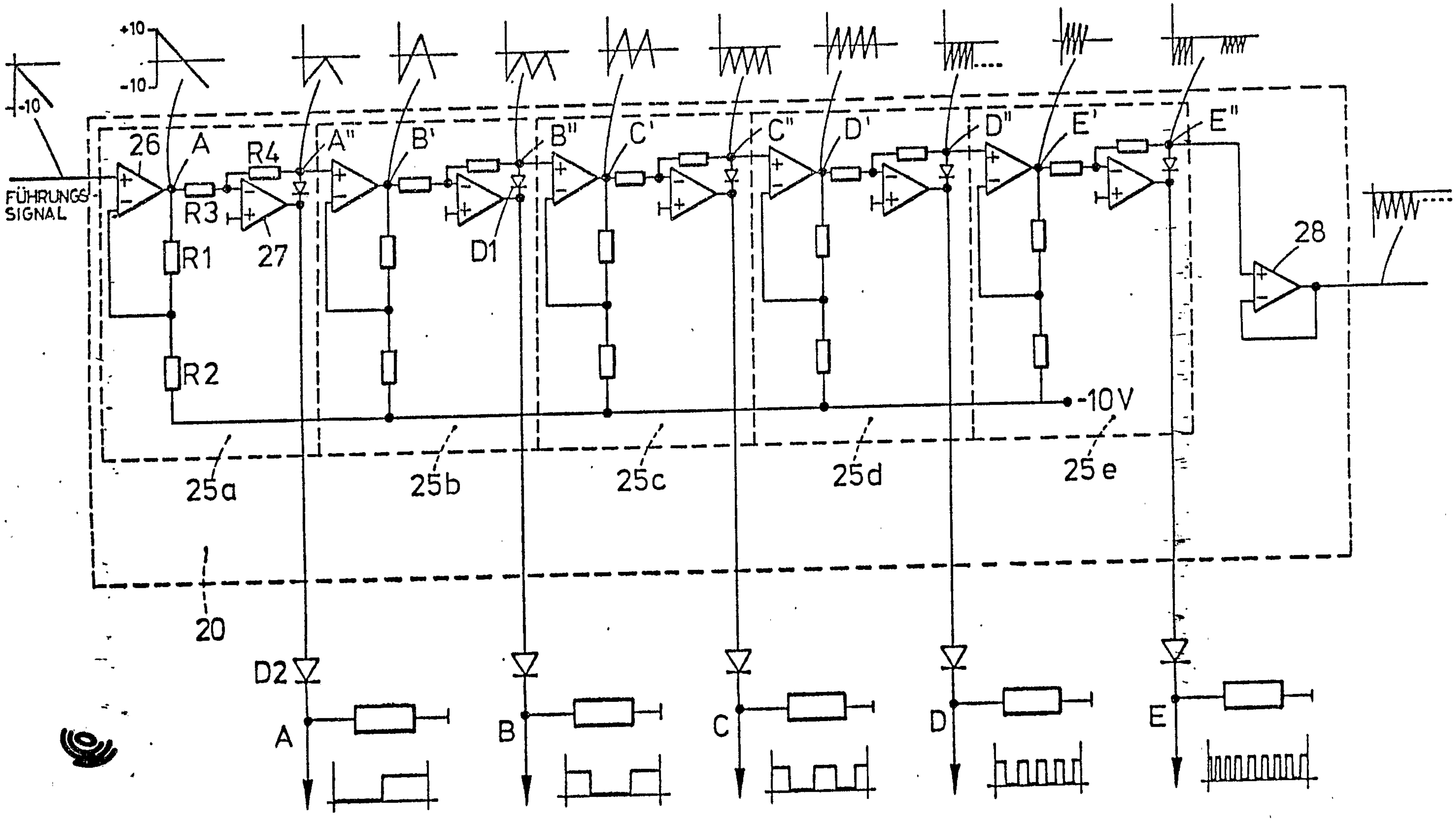
FÜHRUNGS-SIGNAL
-10
+10
-10
26
A
R3
R4
R1
R2
27
A"
B'
D1
B"
C'
C"
D'
D"
E'
E"
28
-10V
25a
25b
25c
25d
25e
20
D2
A
B
C
D
E

Fig. 4

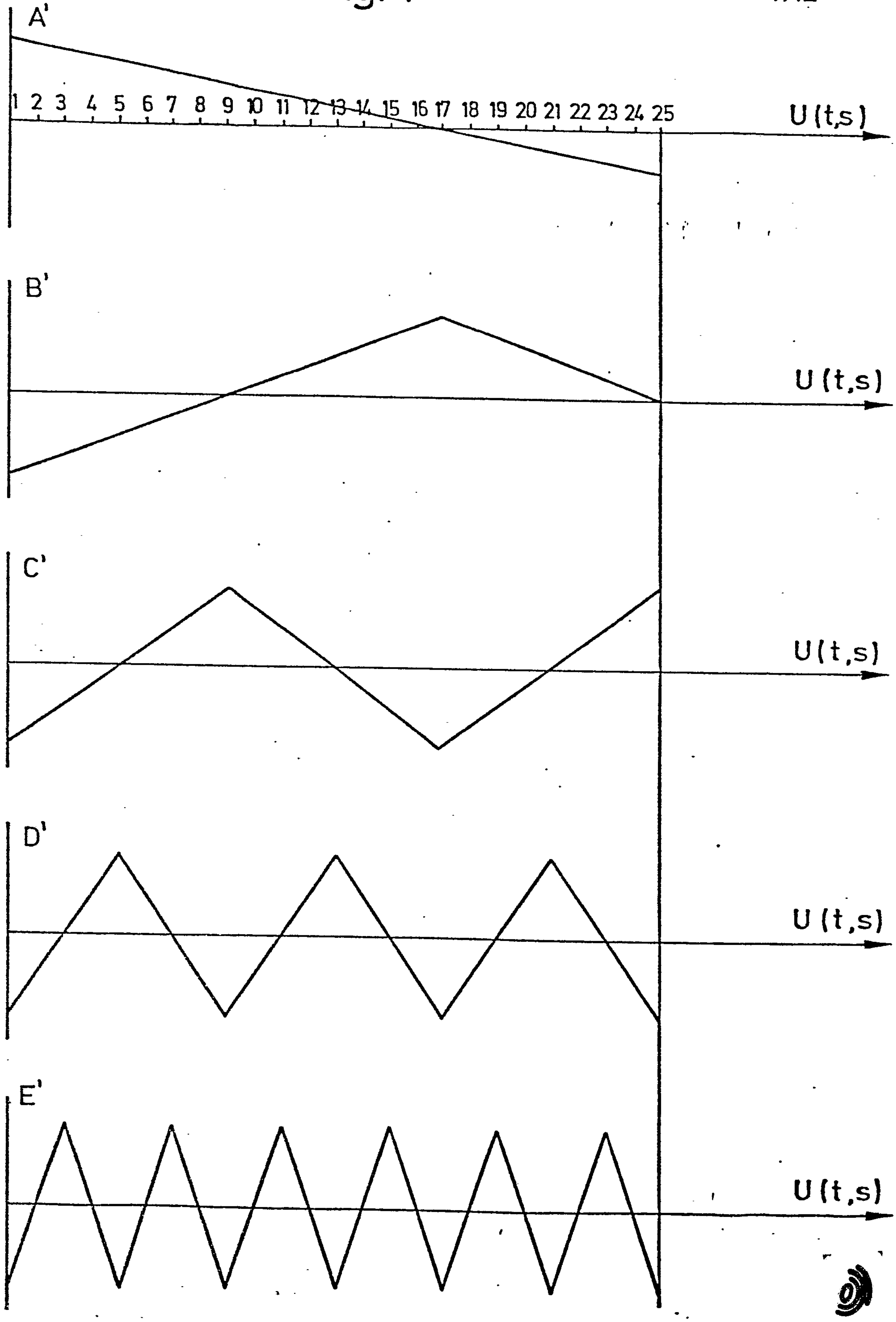
A'
1 2 3 4 5 6 7 8 9 10 11 12 13 14 15 16 17 18 19 20 21 22 23 24 25
U(t,s)
B'
U(t,s)
C'
U(t,s)
D'
U(t,s)
E'
U(t,s)

Fig.5

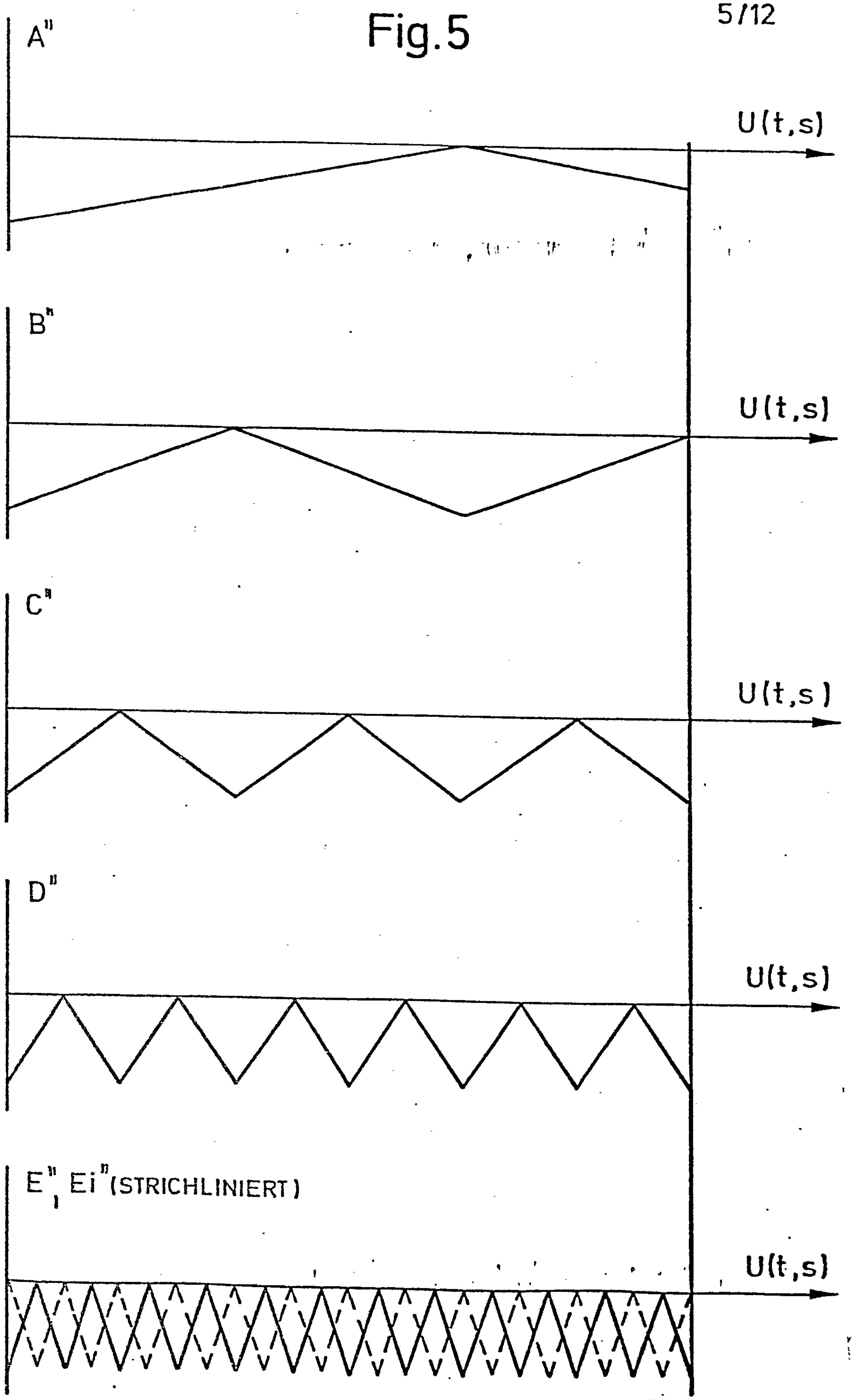

Fig. 6

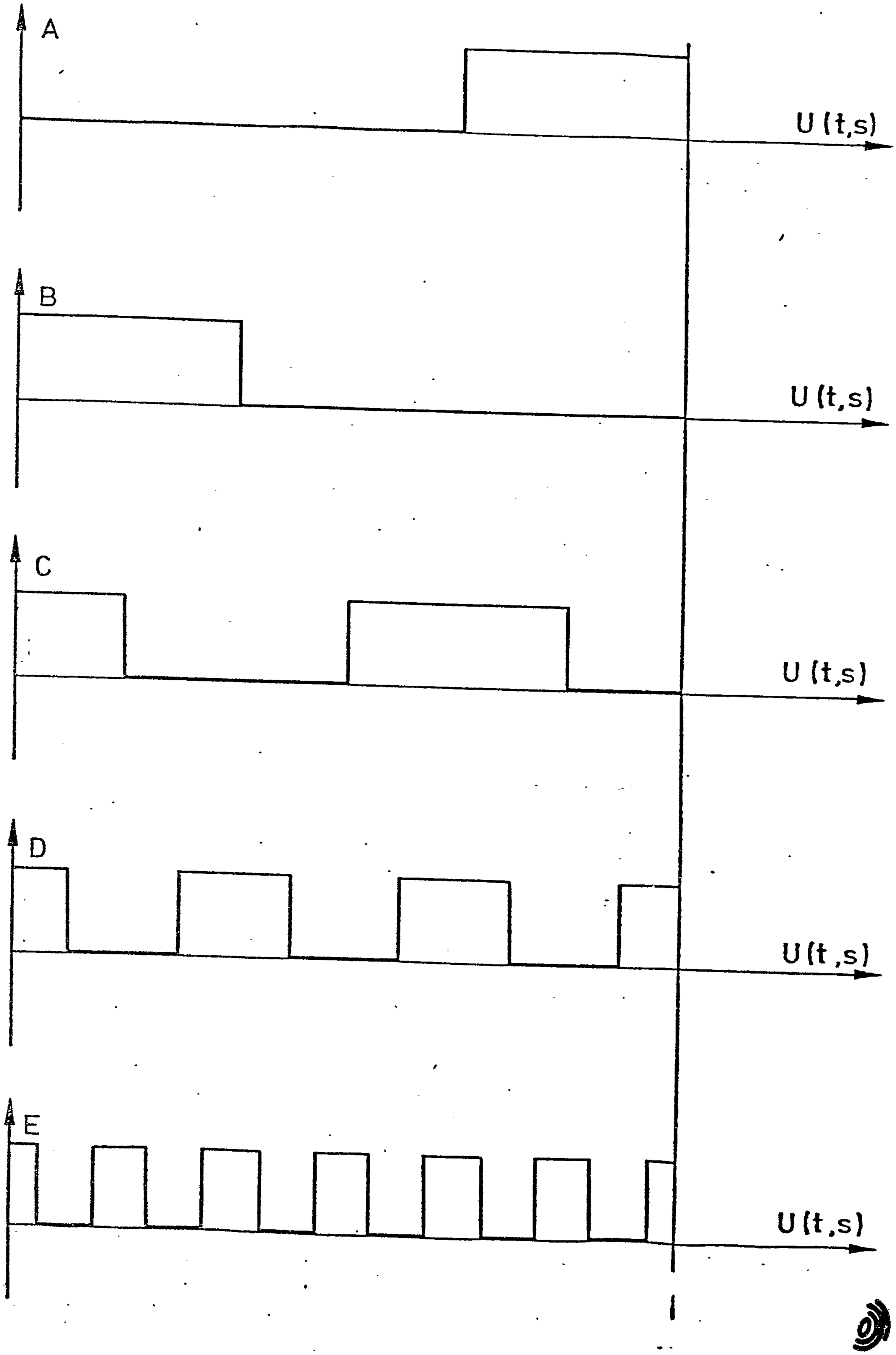

Fig. 7

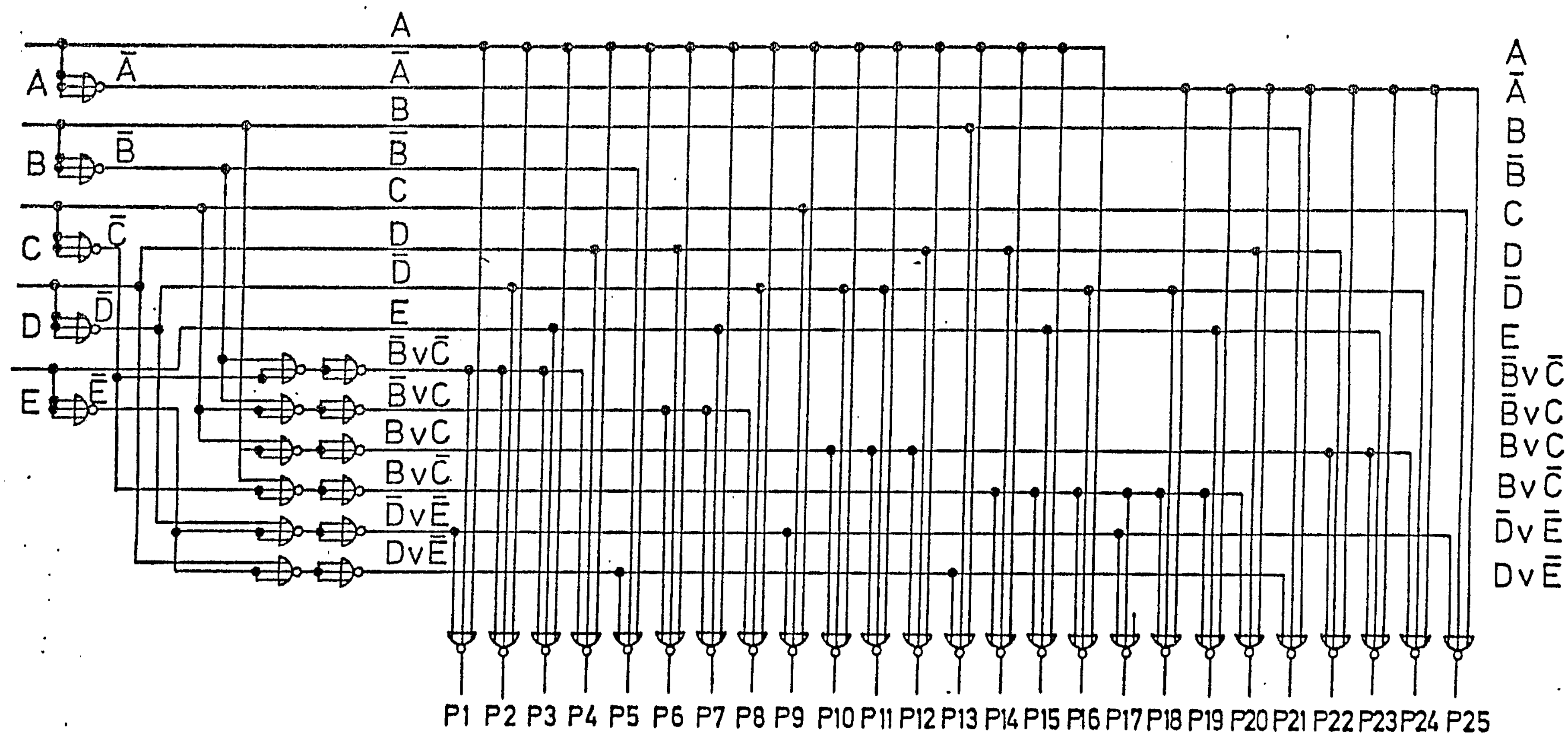
A
B
C
D
E
Ā
B̄
C̄
D̄
Ē
A
Ā
B
B̄
C
D
D̄
E
B̄vC̄
B̄vC
BvC
BvC̄
D̄vĒ
DvĒ
P1 P2 P3 P4 P5 P6 P7 P8 P9 P10 P11 P12 P13 P14 P15 P16 P17 P18 P19 P20 P21 P22 P23 P24 P25

Fig.8

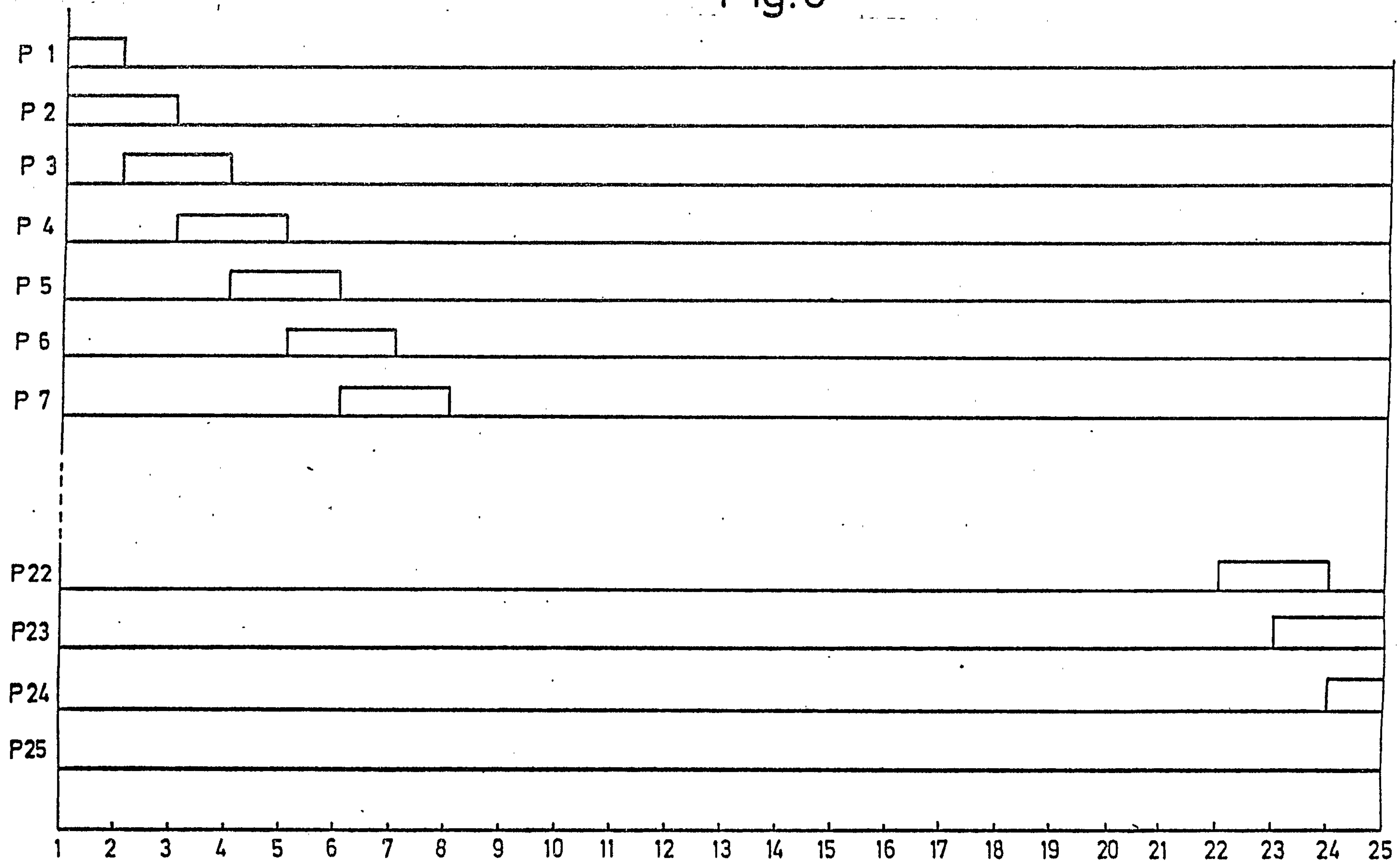
P 1
P 2
P 3
P 4
P 5
P 6
P 7
P22
P23
P24
P25
1
2
3
4
5
6
7
8
9
10
11
12
13
14
15
16
17
18
19
20
21
22
23
24
25

Fig. 9

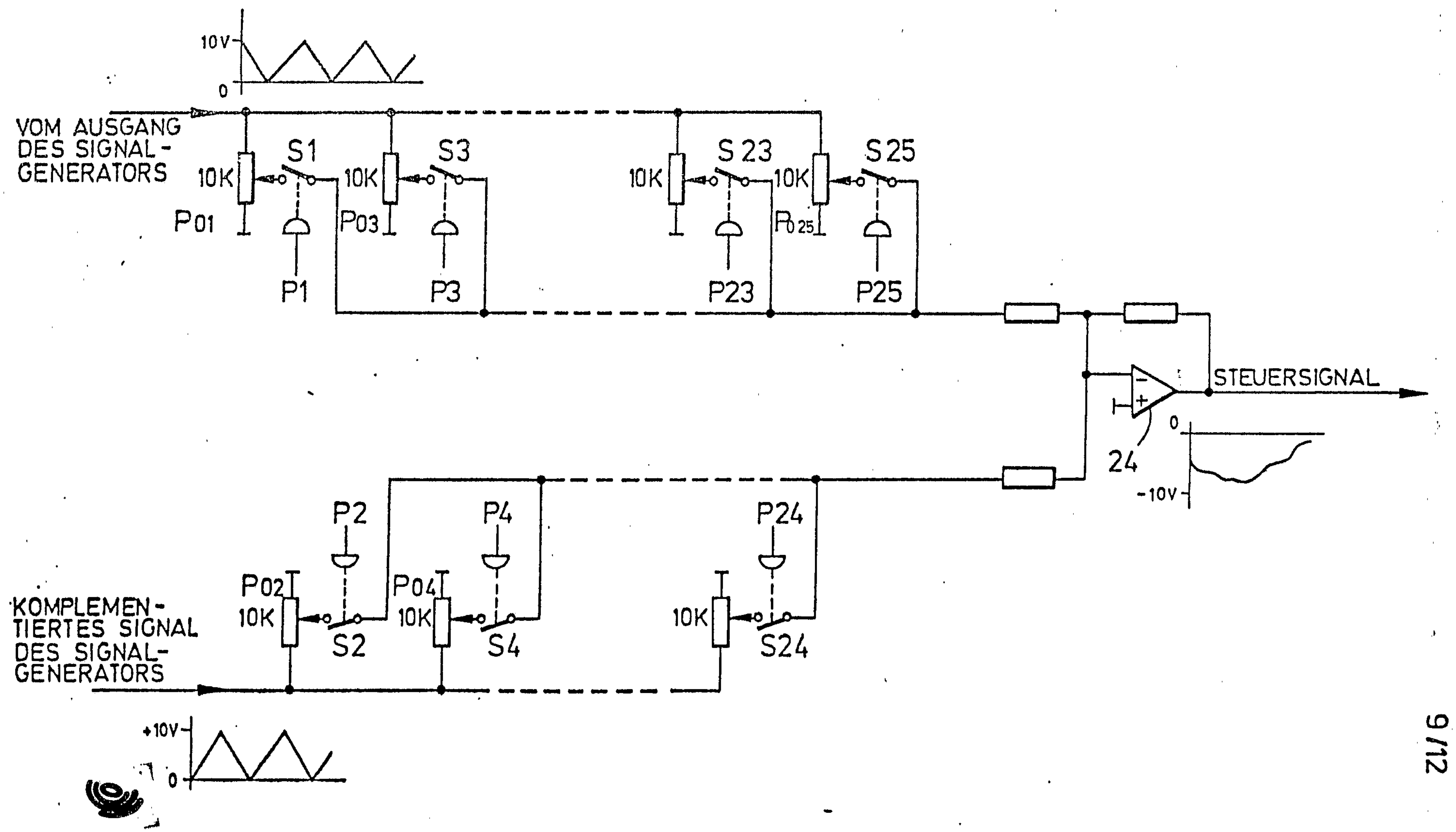
10V
0
VOM AUSGANG
DES SIGNAL-
GENERATORS
10K
S1
P01
P1
10K
S3
P03
P3
10K
S 23
P23
10K
S 25
R025
P25
STEUERSIGNAL
24
0
-10V
P2
P02
10K
S2
P4
P04
10K
S4
P24
10K
S24
KOMPLEMEN-
TIERTES SIGNAL
DES SIGNAL-
GENERATORS
+10V
0

Fig.10

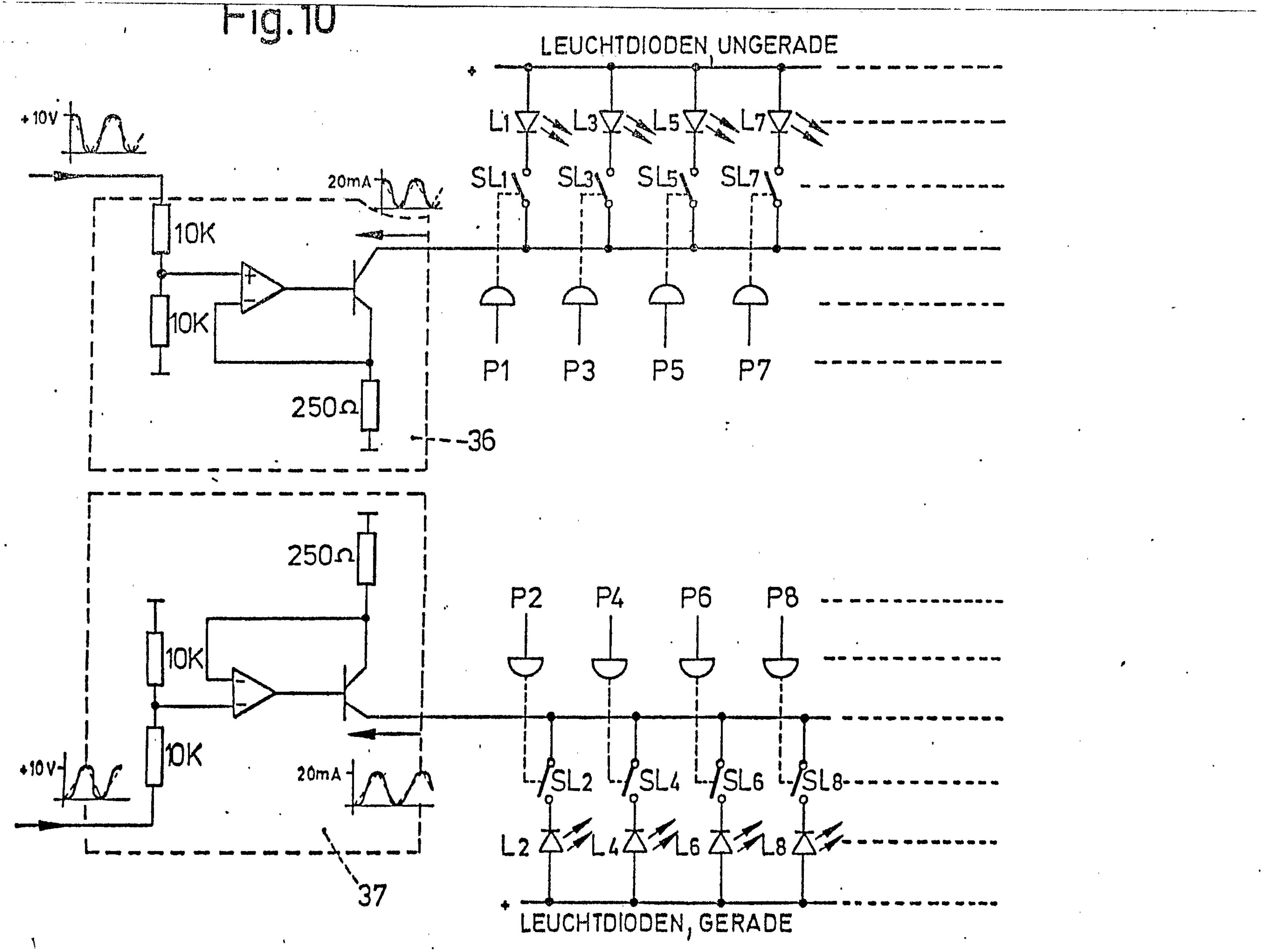
LEUCHTDIODEN UNGERADE
+
+10V
10K
10K
250Ω
20mA
36
L1
L3
L5
L7
SL1
SL3
SL5
SL7
P1
P3
P5
P7
P2
P4
P6
P8
SL2
SL4
SL6
SL8
L2
L4
L6
L8
250Ω
10K
10K
+10V
20mA
37
+
LEUCHTDIODEN, GERADE

Fig.11

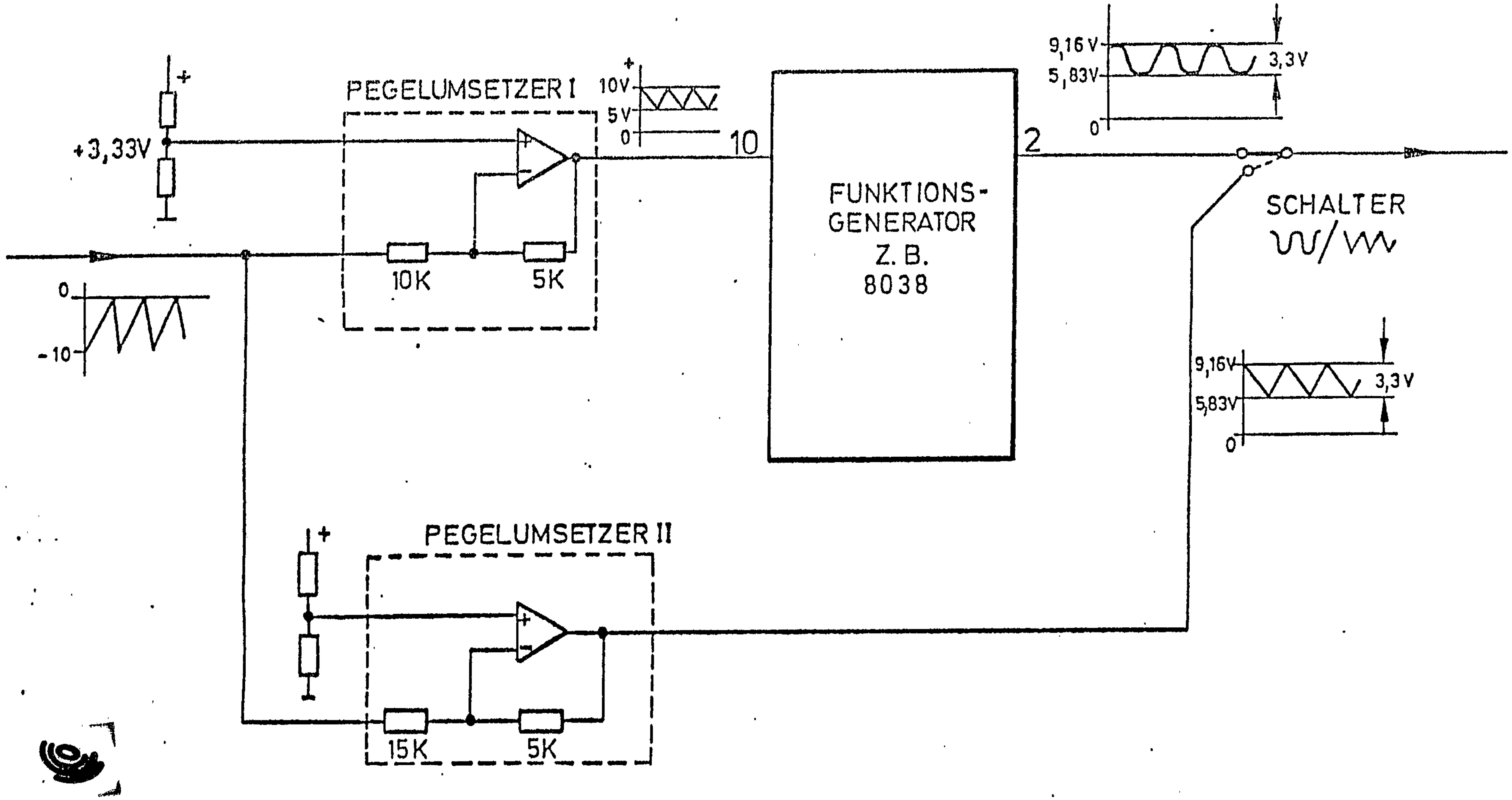

PEGELUMSETZER I
PEGELUMSETZER II
+3,33V
10K
5K
15K
5K
10V
5V
0
10
2
FUNKTIONS-
GENERATOR
Z.B.
8038
9,16V
5,83V
3,3V
SCHALTER
-10

Fig.12

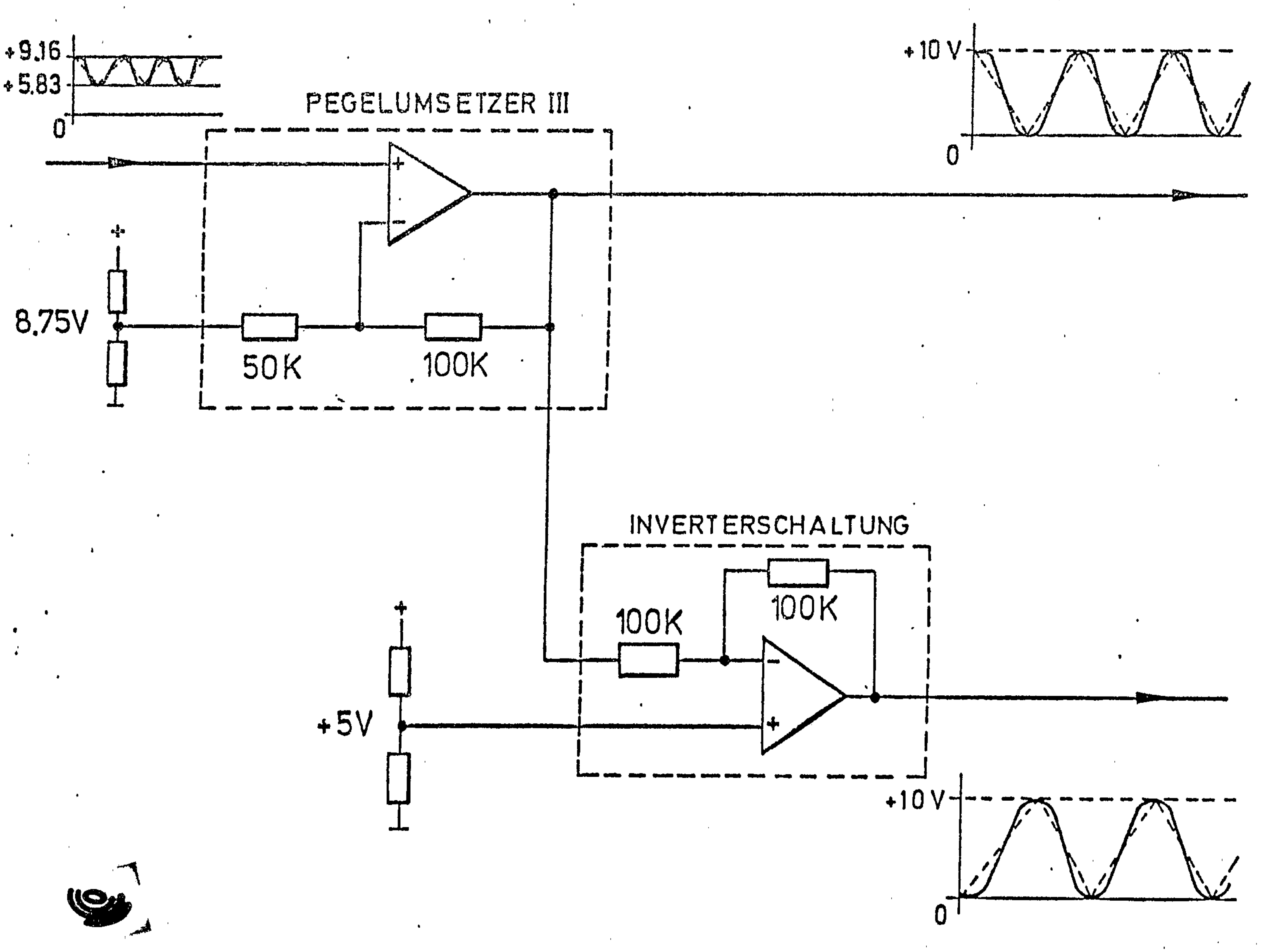
+9,16
+5,83
0
PEGELUMSETZER III
8,75V
50K
100K
+10 V
0
INVERTERSCHALTUNG
100K
100K
+5V
+10 V
0

Europäisches Patentamt

# EUROPÄISCHER RECHERCHENBERICHT

Nummer der Anmeldung

EP 79 10 1353

| EINSCHLÄGIGE DOKUMENTE | | | KLASSIFIKATION DER ANMELDUNG (Int Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 457 091 (ISHIKAWAJIMA-HARIMA JU-KOGYO K.K.)<br>* Seite 8, Zeile 11 bis Seite 18, Zeile 7; Figuren 1-8 *<br>& US - A - 4 011 493<br>-- | 1,2,6,8 | G 05 B 19/04 |
| | FR - A - 2 138 446 (PROMOTION ELECTRONIQUE)<br>* Seite 2, Zeile 27 bis Seite 5, Zeile 22; Figuren 1-4 *<br>-- | 1,5 | RECHERCHIERTE SACHGEBIETE (Int. Cl. 3) |
| | US - A - 3 619 756 (E.M. ROSSINI E.R. LODI, AMF INCORP.)<br>* Spalte 2, Zeilen 11-74 *<br>& DE - A - 1 942 914<br>-- | 6 | G 05 B 19/04<br>19/08 |
| E | EP - A - 0 003 110 (MOOG)<br>* Das ganze Dokument *<br>-- | 1-12 | |
| A | US - A - 3 865 528 (L.G.R. ROESS MOOG INC.)<br>* Spalte 3, Zeile 50 bis Spalte 20, Zeile 52; Figuren 1-16 *<br>& DE - A - 2 445 394<br>---- | 1-4 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 08-01-1980 | CORNILLIE |